# EUROPEAN PATENT SPECIFICATION

(11) **EP 2 611 719 B1**
(45) Date of publication and mention of the grant of the patent: **27.08.2014**
(21) Application number: 11749518.4
(22) Date of filing: 06.07.2011
(51) Int. Cl.: B65G 47/08, B65G 47/64, B65G 47/71

(54) **PROCESS AND SYSTEM FOR GROUPING PRODUCTS TO BE PACKED**
VERFAHREN UND SYSTEM ZUR GRUPPIERUNG VON ZU VERPACKENDEN PRODUKTEN
PROCÉDÉ ET SYSTÈME DE GROUPEMENT DE PRODUITS À EMBALLER

(30) Priority: 30.08.2010 IT MI20101585
(43) Date of publication of application: 10.07.2013
(73) Proprietor: Gampack S.R.L., 29100 Piacenza (PC) (IT)
(72) Inventor: GANDINI, Luciano, I-29029 Rivergaro PC (IT)
(74) Representative: Pizzoli, Antonio
(86) International application number: PCT/IB2011/053001
(87) International publication number: WO 2012/028970

(56) References cited:
- EP-A2- 0 480 436

## Description

The present invention relates to a process for grouping products to be packed, and in particular a process for grouping products on a plurality of rows before the latter are packed. The present invention also relates to a system which can carry out said process.

A known system for grouping products according to the preamble of claim 3 (see e.g. EP 480436) comprises a conveyor provided with a single conveyor belt which transports a plurality of products to a grouping device. This device comprises in turn a series of parallel guides which end with small gates which are simultaneously opened for the time necessary to let a group of products pass, which products are thus already aligned together on the conveyor.

Said known system is difficult to be modified when someone wants to change the number of rows, the shape and the sizes of the products to be grouped, since the mutual distance of all the parallel guides, as well as the arrangement of the guides taking the products to the grouping device, must be changed.

It is therefore an object of the present invention to provide a process and a system which are free from said disadvantages. Said object is achieved with a process and a system, whose main features are disclosed in claims 1 and 3, respectively, while other features are disclosed in the remaining claims.

Thanks to the grouping device which selectively arranges the products on several parallel conveyor belts moving at different speeds, the process and the system according to the present invention can be easily adapted to the number of products to be grouped, so that it is possible to obtain, without using parallel guides, a tidy group of products starting from a series of products coming confusedly from a production line.

The grouping device is further provided with a carriage with particular means, preferably belts, which allow both the stop and the release of the products at the same speed of the conveyor belt on which they are, so as to prevent their possible falls and/or damages. The mutual distance between these means is easily adjustable for adapting the system to the shape and the sizes of the products to be grouped.

Further advantages and features of the process and the system according to the present invention will become clear to those skilled in the art from the following detailed and non-limiting description of an embodiment thereof with reference to the attached drawings, wherein:
- figure 1 shows a top view of the system;
- figure 2 shows a side view of the system of figure 1;
- figure 3 shows a front view of the system of figure 1;
- figures 4 to 8 show top views of the system of figure 1 during different steps of the process; and
- figure 9 shows a top view of the system of figure 1 during the grouping of other products.

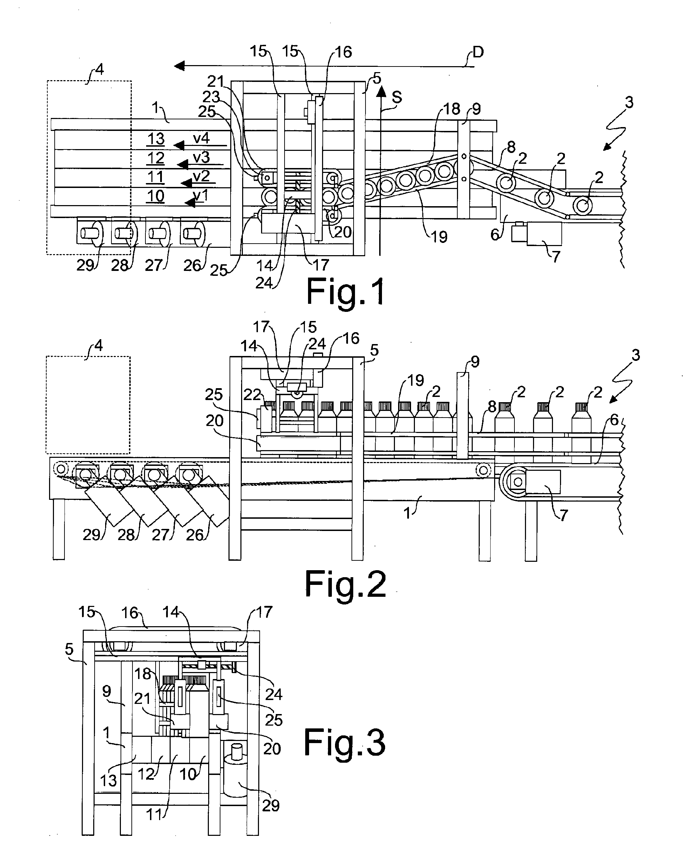

Referring to figures 1 to 3, it is seen that the system according to the present invention comprises in a known way a conveyor 1 suitable for transporting along a feed direction D a plurality of products 2, for example bottles, from a production line 3 to a packing machine 4 or another system for the handling of products 2. A grouping device 5 is arranged along conveyor 1 for grouping products 2 on rows of one or more products, for example four rows of three products each, so that a set of products 2 arranged on several rows aligned to each other is present downstream of the grouping device on conveyor 1, which set can then be handles by packing device 4 for making a single pack. Production line 3 comprises a conveyor belt 6 driven by a motor 7 and provided with guides 8 for guiding products 2 toward a gate 9 arranged upstream of grouping device 5 on conveyor 1.

Conveyor 1 comprises a plurality of parallel conveyor belts, in particular four parallel conveyor belts 10, 11, 12 and 13 which during the operation of the system move in feed direction D with different speeds v1, v2, v3, v4, in particular constant and increasing according to the position of the conveyor belt in conveyor 1, namely speed v2 of second conveyor belt 11 is higher than speed v1 of first conveyor belt 10, and so on.

Grouping device 5 comprises at least one carriage 14 (not necessarily provided with wheels) which is connected to means for moving it with an alternate motion in a secondary direction S substantially perpendicular to feed direction D. The forward motion of carriage 14 in secondary direction S is stepped, wherein each step is substantially equal to the width of conveyor belts 10, 11, 12, 13, while the return motion of carriage 14 in the direction opposite to secondary direction S is continuous. In particular, carriage 14 runs in secondary direction S along one or more tracks 15 of grouping device 5, which are arranged over carriage 14, and is mechanically connected to a belt 16 driven by a motor 17 fixed to grouping device 5. At least one pair of guides 18, 19 is pivoted between carriage 14 and gate 9, so as to easily guide products 2 on conveyor 1 from gate 9 toward carriage 14 during its motion along secondary direction S.

Carriage 14 is also provided with means for stopping products 2 transported by conveyor 1 toward grouping device 5 during the motion of carriage 14 in secondary direction S and/or with means for releasing products 2 on conveyor belts 10, 11, 12, 13 when carriage 14 is still. In particular, said stop and/or release means comprise at least two opposing rotors suitable for rotating in opposite directions along substantially vertical axes for pushing in feed direction D products 2 arranged between these rotors. Said rotors preferably comprise the pulleys of at least one pair of opposing belts 20, 21 which are substantially parallel and are suitable for being driven by one or more motors 22, 23 through these pulleys, so that the portions of belts 20, 21 arranged one in front of the other can both run in feed direction D for moving products 2 comprised between them.

Said stop and/or release means, in particular one or both rotors or belts 20, 21, are mounted on supports which can be moved in secondary direction S with respect to carriage 14, for example by driving a screw actuator 24, so as to adapt their mutual distance to the width of products 2. With this arrangement, products 2 coming from guides 18, 19 can be transported by belts 20, 21 and blocked by the latter when motors 22, 23 are not driven. At least one sensor 25 is arranged along belts 20, 21, in particular at the end thereof with respect to feed direction D, for counting products 2 released by carriage 14. Conveyor belts 10, 11, 12, 13 are connected to one or more motors 26, 27, 28, 29, respectively, provided with reducers and/or speed control for precisely adjusting the speeds v1, v2, v3, v4 of conveyor belts 10, 11, 12, 13. At least one intermediate conveyor belt, for example second conveyor belt 11, preferably projects upstream of conveyor 1, so that the projecting portion of this conveyor belt can be arranged beside a portion of conveyor belt 6 in production line 3 for keeping as low as possible the speed difference of products 2 in the transition zone between production line 3 and conveyor 1.

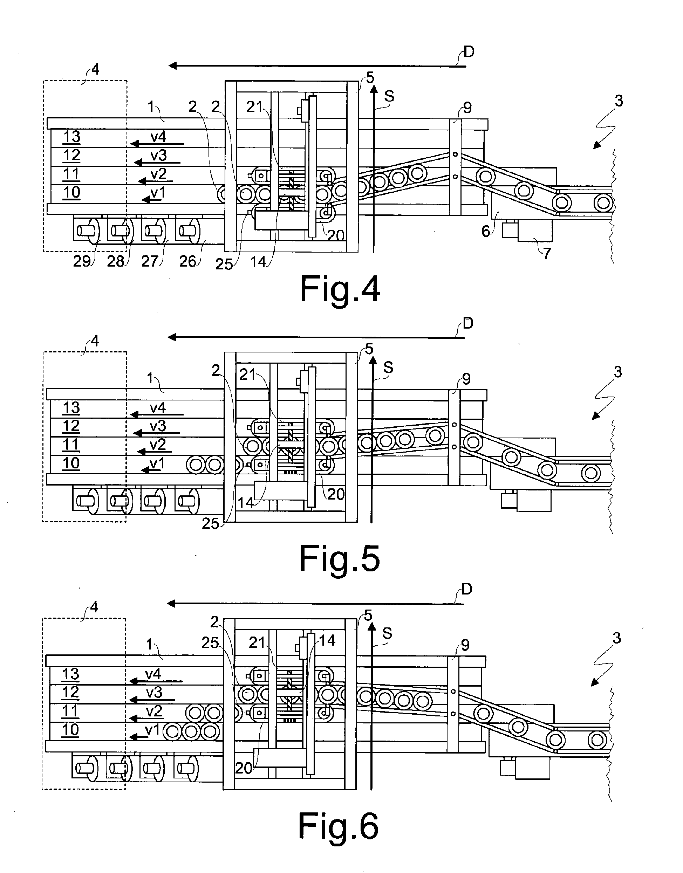

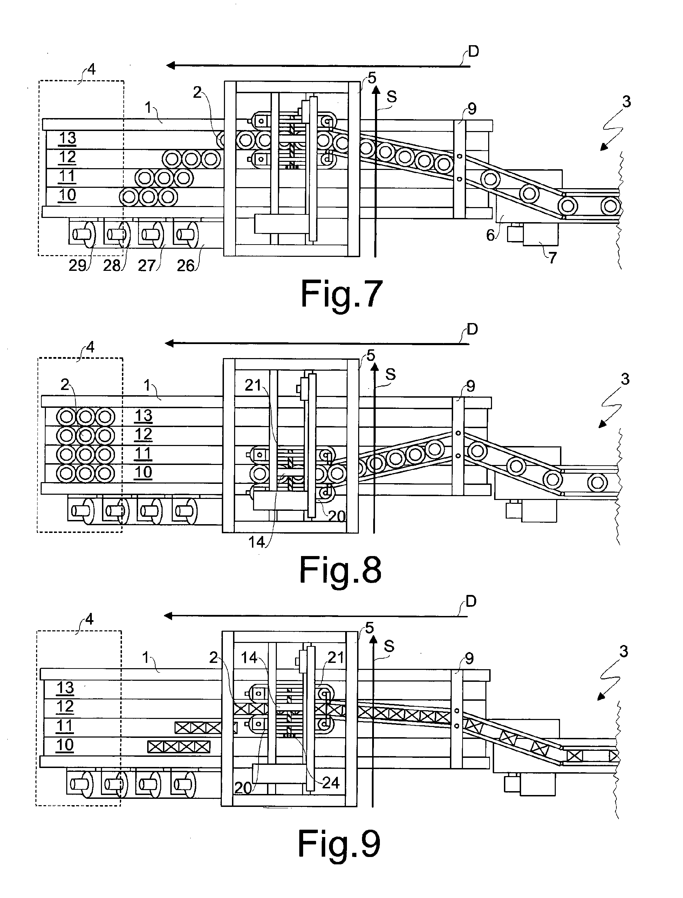

Referring to figure 4, it is seen that during the process according to the present invention belts 20, 21 of carriage 14 run in feed direction D substantially at the same speed v1 of first conveyor belt 10 for selectively releasing a first group of one or more (for example three) products 2 on first conveyor belt 10 of conveyor 1, after which carriage 14 moves in secondary direction S and releases through belts 20, 21 a second group of products 2 on second conveyor belt 11 of conveyor 1 at speed v2, as shown in figure 5. In the meanwhile, the first group of products 2 moves at speed v1 on first conveyor belt 10 of conveyor 1. Figures 6 and 7 show belts 20, 21 of carriage 14 which release a third and a fourth group, respectively, of products 2 on third conveyor belt 12 at speed v3 and on fourth conveyor belt 13 at speed v4, while the first two groups of products 2 on the first two conveyor belts 10, 11 keep moving at speeds v1 and v2. An electronic control unit (not shown in the figures) controls the motion of carriage 14 in secondary direction S and of belts 20, 21 of carriage 14 according to signals emitted by sensor 25.

Figure 8 shows the four groups of products 2 which, by moving at speeds v1, v2, v3, v4, respectively, on the four conveyor belts 10, 11, 12, 13, reach a grouping zone of conveyor 1, for example at packing machine 4, in which these four groups are mutually aligned, namely with products 2 arranged on four rows of three products each. Therefore, speeds v1, v2, v3, v4 of conveyor belts 10, 11, 12, 13 are such that the sum of the time taken by carriage 14 for arranging and releasing a group of products 2 on a conveyor belt 10, 11, 12, 13 (the time taken by first conveyor belt 10 can be considered zero) plus the time taken by this group of products 2, once released by carriage 14, for reaching grouping zone 4, is constant.

Referring to figure 9, it is seen that the system according to the present invention can group products 2 having different sizes and shapes by adjusting by means of screw actuator 24 the mutual distance between belts 20, 21 of carriage 1. An alternative embodiment of the present invention can also provide for the adjustment of the mutual distance between conveyor belts 10, 11, 12, 13 by means of screw actuators or other electric and/or mechanic actuators.

Possible modifications and/or additions may be made by those skilled in the art to the hereinabove disclosed and illustrated embodiment while remaining within the scope of the following claims. In particular, further embodiments of the invention may comprise the technical features of one of the following claims with the addition of one or more technical features, taken singularly or in any mutual combination, disclosed in the text and/or illustrated in the drawings.

## Claims

1. Process for grouping products (2), comprising the following operative steps:
- transporting a plurality of products (2) to be grouped on a conveyor (1) along a feed direction (D) toward a grouping device (5) comprising at least one carriage (14) suitable for moving with an alternate motion in a secondary direction (S);
- releasing from the carriage (14) a first group of one or more products (2) on a first conveyor belt (10) of the conveyor (1);
- moving the carriage (14) in the secondary direction (S) on at least one second conveyor belt (11) of the conveyor (1);
- releasing from the carriage (14) at least one second group of one or more products (2) on the second conveyor belt (11) of the conveyor (1);
- wherein said conveyor belts (10, 11) are driven at different speeds (v1, v2) so that the two groups of products (2) are mutually aligned in a zone (4) of the conveyor (1).

2. Process according to the previous claim, **characterized in that** the carriage (14) is moved in the secondary direction (S) on one or more further conveyor belts (12, 13) of the conveyor (1) which are driven at different speeds (v3, v4) and releases one or more further groups of one or more products (2) on these further conveyor belts (12, 13), so that all the groups of products (2) released by the carriage (14) are mutually aligned in a zone (4) of the conveyor (1).

3. System for grouping products (2), which comprises a conveyor (1) suitable for transporting along a feed direction (D) a plurality of products (2) and a grouping device (5) arranged along the conveyor (1) for grouping the products (2) on rows of one or more products, the grouping device (5) comprising a carriage (14) which is suitable for moving with an alternate motion in a secondary direction (S), **characterized in that** the conveyor (1) comprises a plurality of parallel conveyor belts (10, 11, 12, 13) suitable for being driven at different speeds (v1, v2, v3, v4), and **in that** the carriage (14) is provided with means (20, 21) for stopping the products (2) transported by the conveyor (1) toward the grouping device (5), as well as with means for releasing a group of one or more products (2) on each of the conveyor belts (10, 11, 12, 13).

4. Process or system according to one of the previous claims, **characterized in that** the carriage (14) comprises at least two opposing rotors suitable for rotating in opposite directions.

5. Process or system according to the previous claim, **characterized in that** said rotors comprise the pulleys of at least one pair of belts (20, 21) suitable for being driven by one or more motors (22, 23) through these pulleys, so that the portions of the belts (20,21) arranged one in front of the other can both run in the feed direction (D).

6. Process or system according to claim 4 or 5, **characterized in that** one or both rotors or belts (20, 21) of the carriage (14) are mounted on supports which can be moved in the secondary direction (S) with respect to the carriage (14).

7. Process or system according to claim 5 or 6, **characterized in that** when releasing the products (2) on a conveyor belt (10, 11, 12, 13) the belts (20, 21) run substantially at the same speed (v1, v2, v3, v4) of this conveyor belt (10, 11, 12, 13).

8. Process or system according to one of the previous claims, **characterized in that** the secondary direction (S) of the carriage (14) is substantially perpendicular to the feed direction (D) of the conveyor (1).

9. Process or system according to one of the previous claims, **characterized in that** during the operation the forward motion of the carriage (14) in the secondary direction (S) is stepped, while the return motion of the carriage (14) in the direction opposite to the secondary direction (S) is continuous.

10. Process or system according to one of the previous claims, **characterized in that** during the operation the conveyor belts (10, 11, 12, 13) of the conveyor (1) are driven at constant speeds (v1, v2, v3, v4).

11. Process or system according to one of the previous claims, **characterized in that** during the operation the conveyor belts (10, 11, 12, 13) move at speeds (v1, v2, v3, v4) increasing according to the position of the conveyor belts (10, 11, 12, 13) in the conveyor (1).

12. Process or system according to one of the previous claims, **characterized in that** during the operation the conveyor belts (10, 11, 12, 13) of the conveyor (1) are driven at such speeds (v1, v2, v3, v4) that the sum of the time taken by the carriage (14) to arrange and release a group of products (2) on a conveyor belt (10, 11, 12, 13) and of the time taken by this group of products (2), once released by the carriage (14), to reach the grouping zone (4), is constant.

13. Process or system according to one of the previous claims, **characterized in that** at least one intermediate conveyor belt (11) projects upward of the conveyor (1).

14. Process or system according to one of the previous claims, **characterized in that** at least one pair of guides (18, 19) is pivoted between the carriage (14) and a gate (9) which is arranged upstream of the grouping device (5) on the conveyor (1).

## Patentansprüche

1. Verfahren zum Gruppieren von Produkten (2), umfassend die folgenden Schritte:
- Transportieren einer Mehrzahl von auf einer Fördereinrichtung (1) zu gruppierenden Produkten (2) entlang einer Zuführrichtung (D) zu einer Gruppierungseinrichtung (5) mit wenigstens einem zum Bewegen mit einer alternierenden Bewegung in einer zweiten Richtung (S) geeigneten Wagen (14);
- Freigeben einer ersten Gruppe von einem oder mehreren Produkten (2) aus dem Wagen (14) auf ein erstes Förderband (10) der Fördereinrichtung (1);
- Bewegen des Wagens (14) in der zweiten Richtung (S) zu wenigstens einem zweiten Förderband (11) der Fördereinrichtung (1);
- Freigeben wenigstens einer zweiten Gruppe von einem oder mehreren Produkten (2) aus dem Wagen (14) auf das zweite Förderband (11) der Fördereinrichtung (1);
- wobei die besagten Förderbänder (10,11) mit verschiedenen Geschwindigkeiten (v1, v2) angetrieben werden, so dass die zwei Gruppen von Produkten (2) in einer Zone (4) der Fördereinrichtung (1) relativ zueinander ausgerichtet sind.

2. Verfahren gemäß dem vorangehenden Anspruch, **dadurch gekennzeichnet, dass** der Wagen (14) zu einem oder mehreren, weiteren Förderbändern (12, 13) der Fördereinrichtung (1), welche mit unterschiedlichen Geschwindigkeiten (v3, v4) angetrieben sind, in der zweiten Richtung (S) bewegt wird, und eine oder mehrere Gruppen von einem oder mehreren Produkten (2) auf diese weiteren Förderbänder (12, 13) freigibt, so dass all die Gruppen von aus dem Wagen (14) freigegebenen Produkten (2) in einer Zone (4) der Fördereinrichtung (1) relativ zueinander ausgerichtet sind.

3. System zum Gruppieren von Produkten (2), umfassend eine zum Transport einer Mehrzahl von Produkten (2) entlang einer Zuführrichtung (D) geeignete Fördereinrichtung (1) sowie eine entlang der Fördereinrichtung (1) angeordnete Gruppierungseinrichtung (5) zum Gruppieren der Produkte (2) in Reihen von einem oder mehreren Produkten, wobei die Gruppierungseinrichtung (5) einen zum Bewegen mit einer alternierenden Bewegung in einer zweiten Richtung (S) geeigneten Wagen (14) umfasst, **dadurch gekennzeichnet, dass** die Fördereinrichtung (1) eine Mehrzahl von parallelen, für einen Antrieb mit unterschiedlichen Geschwindigkeiten (v1, v2, v3, v4) geeigneten Förderbändern (10, 11, 12, 13) umfasst, und dadurch, dass der Wagen (14) mit Mitteln (20, 21) versehen ist zum Stoppen der von der Fördereinrichtung (1) zu der Gruppierungseinrichtung (5) transportierten Produkte (2), sowie mit Mitteln zum Freigeben einer Gruppe von einem oder mehreren Produkten (2) auf jedem der Förderbänder (10, 11, 12, 13).

4. Verfahren oder System gemäß einem der vorangehenden Ansprüche, **dadurch gekennzeichnet, dass** der Wagen (14) wenigstens zwei gegenüberliegende Rotoren umfasst, welche geeignet sind, um sich in entgegengesetzte Richtungen zu drehen.

5. Verfahren oder System gemäß dem vorangehenden Anspruch, **dadurch gekennzeichnet, dass** die besagten Rotoren die Rollen von wenigstens einem Paar von Bändern (20, 21) umfassen, welche geeignet sind, durch diese Rollen von einem oder mehreren Motoren (22, 23) angetrieben zu werden, so dass die einer vor dem anderen angeordneten Bereiche der Bänder (20, 21) beide in der Zuführrichtung (D) laufen können.

6. Verfahren oder System gemäß Anspruch 4 oder 5, **dadurch gekennzeichnet, dass** einer oder beide Rotoren oder Bänder (20, 21) des Wagens (14) auf Stützen montiert sind, welche gegenüber dem Wagen (14) in der zweiten Richtung (S) bewegt werden können.

7. Verfahren oder System gemäß Anspruch 5 oder 6, **dadurch gekennzeichnet, dass** die Bänder (20, 21) beim Freigeben der Produkte (2) auf ein Förderband (10, 11, 12, 13) substantiell mit der gleichen Geschwindigkeit (v1, v2, v3, v4) dieses Förderbandes (10, 11, 12, 13) laufen.

8. Verfahren oder System gemäß einem der vorangehenden Ansprüche, **dadurch gekennzeichnet, dass** die zweite Richtung (S) des Wagens (14) substantiell rechtwinklig zu der Zuführrichtung (D) der Fördereinrichtung (1) ist.

9. Verfahren oder System gemäß einem der vorangehenden Ansprüche, **dadurch gekennzeichnet, dass** während des Betriebs die Vorwärtsbewegung des Wagens (14) in der zweiten Richtung (S) schrittweise erfolgt, während die Rückwärtsbewegung des Wagens (14) in der Richtung entgegen der zweiten Richtung (S) kontinuierlich ist.

10. Verfahren oder System gemäß einem der vorangehenden Ansprüche, **dadurch gekennzeichnet, dass** die Förderbänder (10, 11, 12, 13) der Fördereinrichtung (1) während des Betriebs mit konstanten Geschwindigkeiten (v1, v2, v3, v4) angetrieben werden.

11. Verfahren oder System gemäß einem der vorangehenden Ansprüche, **dadurch gekennzeichnet, dass** sich die Förderbänder (10, 11, 12, 13) während des Betriebs mit Geschwindigkeiten (v1, v2, v3, v4) bewegen, welche gemäß der Position der Fördebänder (10, 11, 12, 13) in der Fördereinrichtung (1) ansteigen.

12. Verfahren oder System gemäß einem der vorangehenden Ansprüche, **dadurch gekennzeichnet, dass** die Förderbänder (10, 11, 12, 13) der Fördereinrichtung (1) während des Betriebs mit derartigen Geschwindigkeiten (v1, v2, v3, v4) angetrieben werden, dass die Summe aus der Zeit, welche von dem Wagen (14) benötigt wird, um eine Gruppe von Produkten (2) auf einem Förderband (10, 11, 12, 13) zu platzieren und freizugeben, und der Zeit, welche von der Gruppe von Produkten (2) benötigt wird, um, einmal von dem Wagen (14) freigegeben, die Gruppierungszone (4) zu erreichen, konstant ist.

13. Verfahren oder System gemäß einem der vorangehenden Ansprüche, **dadurch gekennzeichnet, dass** sich wenigstens ein mittleres Förderband (11) oberhalb der Fördereinrichtung (1) erstreckt.

14. Verfahren oder System gemäß einem der vorangehenden Ansprüche, **dadurch gekennzeichnet, dass** wenigstens ein Paar von Führungen (18, 19) zwischen dem Wagen (14) und einem stromaufwärts der Gruppierungseinrichtung (5) der Fördereinrichtung (1) angeordneten Gatter (9) schwenkbar gelagert ist.

## Revendications

1. Procédé pour grouper des produits (2), comprenant les étapes opérationnelles suivantes :
transporter une pluralité de produits (2) à grouper sur un transporteur (1) le long d'une direction d'alimentation (D) vers un dispositif de groupement (5) comprenant au moins un chariot (14) approprié pour se déplacer avec un mouvement alterné dans une direction secondaire (S) ;
libérer du chariot (14) un premier groupe d'un ou de plusieurs produits (2) sur une première courroie transporteuse (10) du transporteur (1) ;
déplacer le chariot (14) dans la direction secondaire (S) sur au moins une seconde courroie transporteuse (11) du transporteur (1) ;
libérer du chariot (14) au moins un second groupe d'un ou de plusieurs produits (2) sur la seconde courroie transporteuse (11) du transporteur (1) ;
dans lequel lesdites courroies transporteuses (10, 11) sont entraînées à différentes vitesses (v1, v2) de sorte que les deux groupes de produits (2) sont mutuellement alignés dans une zone (4) du transporteur (1).

2. Procédé selon la revendication précédente, **caractérisé en ce que** le chariot (14) est déplacé dans la direction secondaire (S) sur une ou plusieurs courroies transporteuses supplémentaires (12, 13) du transporteur (1) qui sont entraînées à différentes vitesses (v3, v4) et libère un ou plusieurs groupes supplémentaires d'un ou de plusieurs produits (2) sur ces courroies transporteuses supplémentaires (12, 13), de sorte que tous les groupes de produits (2) libérés par le chariot (14) sont mutuellement alignés dans une zone (4) du transporteur (1).

3. Système pour grouper des produits (2), qui comprend un transporteur (1) approprié pour transporter le long d'une direction d'alimentation (D), une pluralité de produits (2) et un dispositif de groupement (5) agencé le long du transporteur (1) pour grouper les produits (2) sur des rangées d'un ou de plusieurs produits, le dispositif de groupement (5) comprenant un chariot (14) qui est approprié pour se déplacer avec un mouvement alterné dans une direction secondaire (S), **caractérisé en ce que** le transporteur (1) comprend une pluralité de courroies transporteuses parallèles (10, 11, 12, 13) appropriées pour être entraînées à différentes vitesses (v1, v2, v3, v4) et **en ce que** le chariot (14) est prévu avec des moyens (20, 21) pour arrêter les produits (2) transportés par le transporteur (1) vers le dispositif de groupement (5), ainsi qu'avec des moyens pour libérer un groupe d'un ou de plusieurs produits (2) sur chacune des courroies transporteuses (10, 11, 12, 13).

4. Procédé ou système selon l'une des revendications précédentes, **caractérisé en ce que** le chariot (14) comprend au moins deux rotors opposés appropriés pour tourner dans des directions opposées.

5. Procédé ou système selon la revendication précédente, **caractérisé en ce que** lesdits rotors comprennent les poulies d'au moins une paire de courroies (20, 21) appropriées pour être entraînées par un ou plusieurs moteurs (22, 23) par le biais de ces poulies, de sorte que les parties des courroies (20, 21) agencées l'une en face de l'autre peuvent toutes deux s'étendre dans la direction d'alimentation (D).

6. Procédé ou système selon la revendication 4 ou 5, **caractérisé en ce qu'**un(e) ou deux rotors ou courroies (20, 21) du chariot (14) sont montés sur des supports qui peuvent être déplacés dans la direction secondaire (S) par rapport au chariot (14).

7. Procédé ou système selon la revendication 5 ou 6, **caractérisé en ce que** lors de la libération des produits (2) sur une courroie transporteuse (10, 11, 12, 13), les courroies (20, 21) s'étendent sensiblement à la même vitesse (v1, v2, v3, v4) de cette courroie transporteuse (10, 11, 12, 13).

8. Procédé ou système selon l'une des revendications précédentes, **caractérisé en ce que** la direction secondaire (S) du chariot (14) est sensiblement perpendiculaire à la direction d'alimentation (D) du transporteur (1).

9. Procédé ou système selon l'une des revendications précédentes, **caractérisé en ce que** pendant le fonctionnement, le déplacement vers l'avant du chariot (14) dans la direction secondaire (S) est réalisé par palier, alors que le mouvement du retour du chariot (14) dans la direction opposée à la direction secondaire (S) est continu.

10. Procédé ou système selon l'une des revendications précédentes, **caractérisé en ce que** pendant le fonctionnement, les courroies transporteuses (10, 11, 12, 13) du transporteur (1) sont entraînées à des vitesses constantes (v1, v2, v3, v4).

11. Procédé ou système selon l'une des revendications précédentes, **caractérisé en ce que** pendant le fonctionnement, les courroies transporteuses (10, 11, 12, 13) se déplacent à des vitesses (v1, v2, v3, v4) augmentant selon la position des courroies transporteuses (10, 11, 12, 13) dans le transporteur (1).

12. Procédé ou système selon l'une des revendications précédentes, **caractérisé en ce que** pendant le fonctionnement, les courroies transporteuses (10, 11, 12, 13) du transporteur (1) sont entraînées à des vitesses (v1, v2, v3, v4) telles que la somme du temps que le chariot (14) met à agencer et libérer un groupe de produits (2) sur une courroie transporteuse (10, 11, 12, 13) et du temps que ce groupe de produits (2), une fois libéré par le chariot (14), met à atteindre la zone de groupement (4), est constant.

13. Procédé ou système selon l'une des revendications précédentes, **caractérisé en ce qu'**au moins une courroie transporteuse intermédiaire (11) fait saillie vers le haut du transporteur (1).

14. Procédé ou système selon l'une des revendications précédentes, **caractérisé en ce qu'**au moins une paire de guides (18, 19) est pivotée entre le chariot (14) et une porte (9) qui est agencée en amont du dispositif de groupement (5) sur le transporteur (1).
